(19) Europäisches Patentamt
European Patent Office
Office européen des brevets

(11) **EP 3 683 190 B1**

(12) **EUROPÄISCHE PATENTSCHRIFT**

(45) Veröffentlichungstag und Bekanntmachung des Hinweises auf die Patenterteilung:
**09.03.2022 Patentblatt 2022/10**

(21) Anmeldenummer: **19152213.5**

(22) Anmeldetag: **17.01.2019**

(51) Internationale Patentklassifikation (IPC):
**C01G 49/06** *(2006.01)* **C09C 1/24** *(2006.01)*

(52) Gemeinsame Patentklassifikation (CPC):
**C09C 1/24; C01G 49/06;** C01P 2004/64;
C01P 2006/12; C01P 2006/63; C01P 2006/64

(54) **VERFAHREN ZUR HERSTELLUNG VON HÄMATIT PIGMENTEN**

METHOD FOR MANUFACTURING HEMATITE PIGMENTS

PROCÉDÉ DE FABRICATION DE PIGMENTS D'HÉMATITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.07.2020 Patentblatt 2020/30**

(73) Patentinhaber: **LANXESS Deutschland GmbH 50569 Köln (DE)**

(72) Erfinder:
• **SCHAUFLER, Larissa 45149 Essen (DE)**
• **WEBER-CZAPLIK, Anna 40474 Düsseldorp (DE)**
• **ROSENHAHN, Carsten 47906 Kempen (DE)**
• **KATHREIN, Christine 40474bDüsseldorf (DE)**

(56) Entgegenhaltungen:
**WO-A1-2013/045608     DE-A1- 4 235 944**

• **DATABASE WPI Week 201360 Thomson Scientific, London, GB; AN 2013-K34711 XP002792692, & CN 102 976 413 A (CHINA NONFERROUS GROUP GUANGXI PINGGUI) 20. März 2013 (2013-03-20)**

## Beschreibung

Die Erfindung betrifft ein Verfahren zur Herstellung von Hämatit Pigmenten.

Die Herstellung von Hämatitpigmenten ist bereits hinlänglich bekannt. So wird beispielsweise ein abgewandelter Penniman Prozess in der WO2013/045608 ausgehend von einem feinteiligem Hämatitkeim, Eisen und einem Eisensalz, vorzugsweise Eisennitrat beschrieben.

Günstigere Ausgangsprodukte wie insbesondere Eisensulfat fallen beispielsweise bei der Titandioxidherstellung an. Eisenoxide sind daher auch bereits unter Verwendung von Eisensulfat beschrieben. So findet sich bspw. in CN102976413 und CN101844815 jeweils ein Verfahren ausgehend von einem üblichen FeOOH Keim, zu dem gleichzeitig Eisensulfat und $CaCO_3$ gegeben werden. Nachteilig an dieser Verfahrensweise ist allerdings, dass sich damit nur bedingt gute Rot-Pigmente herstellen lassen.

Aus DE4235944-A1 ist die Herstellung von Eisenoxid-Direktrotpigmenten beschrieben, bei der zunächst die Keimsynthese stattfindet und dann der Pigmentaufbau. Die beispielhaft beschriebene Keimsynthese erfolgt dabei mit einer NaOH-Lösung als Fällungsmittel und der anschließende Pigmentaufbau mit metallischem Eisen oder mit einem Eisen(II)salz und einer Alkalilösung.

Aufgabe der vorliegenden Erfindung war daher die Bereitstellung eines verbesserten Verfahrens zur Herstellung von Eisenoxidpigmenten, insbesondere mit verbessertem Rot-Farbton.

Die Erfindung betrifft daher ein Verfahren zur Herstellung von einem Hämatit Pigment mit einem a*-Wert von größer als 20, insbesondere größer als 25, CIELAB Einheiten als Purton gemessen im Alkydharz nach DIN EN ISO 787-25 : 2007, durch Umsetzung von Eisensulfat mit Sauerstoff in Gegenwart eines Pigmentkeims, dadurch gekennzeichnet, dass man

    a) Wasser, enthaltend

        i) wenigstens einen Pigmentkeim ausgewählt aus der Gruppe bestehend aus FeOOH und $Fe_2O_3$ und
        ii) Eisensulfat

    als Vorlage vorlegt und

    b) wenigstens ein Erdalkalicarbonat, insbesondere $CaCO_3$, $MgCO_3$, $CaMg(CO_3)_2$ oder Mischungen davon und

    c) Sauerstoff-haltiges Gas
    zu der Vorlage zugibt, wobei wenigstens 95 Gew.-% der Gesamtmenge an in dem Verfahren eingesetztem Eisensulfat vor Zugabe der Komponenten b) und c) in der Vorlage a) enthalten sind und die Zugabe der Komponente b) zur Vorlage in Form einer wässrigen Suspension erfolgt.

## Hämatit Pigment

### CIELAB Farborte

Für die Messung der Farbeigenschaften von Eisenoxid-Rot-Pigmenten gibt es seit langem bestehende Testmethoden, bei denen die Farbigkeit von mit Eisenoxid-Rot-Pigmenten eingefärbten Medien wie Kunststoff-Prüfkörpern oder Lacksystemen gemessen werden.

Als Standard-Parameter zur Messung der Farbigkeit von Eisenoxid-Rot-Pigmenten haben sich die Parameter des sogenannten CIELAB-Farbraums etabliert. Dabei ist jede wahrnehmbare Farbe in diesem dreidimensionalem Farbraum durch den Farbort mit den Koordinaten L* (Helligkeit), a* (Rot-Grün-Wert) und b* (Gelb-Blau-Wert) definiert. Je positiver ein a*-Wert ist, desto stärker ist die Farbe Rot ausgeprägt, und je positiver ein b*-Wert ist, desto stärker ist die Farbe Gelb ausgeprägt. Die Farbe Blau ist dagegen umso stärker ausgeprägt, je negativer der b*-Wert ist. Neben diesen Parametern wird auch oft die Farbsättigung Cab* (auch Chroma, Chromatizität oder Buntheit) angegeben. Dieser Wert ergibt sich direkt aus den Werten a* und b* und stellt die Quadratwurzel der Summe der Quadrate von a* und b* dar. Die Werte a*, b*, L*, und Cab* sind dimensionslose Werte, die üblicherweise als "CIELAB-Einheiten" bezeichnet werden.

Bei der Farbmessung von Eisenoxid-Rot-Pigmenten hat sich für Lacksysteme die Prüfung in einem langöligen Alkydharz (nach DIN EN ISO 11664-4:2011-07 und DIN EN ISO 787-25:2007) etabliert. Als mögliches Alkydharz wurde früher das Alkydal L 64 der Firma Bayer verwendet. Mittlerweile werden andere, ähnliche Alkydharze wie das Worleekyd P 151 der Firma Worlee Chemie GmbH eingesetzt.

Die entsprechende Farbmessung im Kunststoff erfolgt beispielsweise in Polyethylen (High Density Polyethylene, HDPE) bei einer Pigmentierungshöhe von 1 Gew.%.

Bevorzugt besitzt das nach dem erfindungsgemäßen Verfahren hergestellte Hämatit-Pigment einen a*-Wert von 25,5 bis 30 CIELAB Einheiten als Purton, gemessen im Alkydharz nach DIN EN ISO 787-25 : 2007.

Ebenfalls bevorzugt besitzt das nach dem erfindungsgemäßen Verfahren hergestellte Pigment einen b*- Wert von kleiner als 30 CIELAB Einheiten, vorzugweise einen Wert von 6 bis 29 CIELAB Einheiten als Purton, gemessen im Alkydharz nach DIN EN ISO 787-25 : 2007.

Bevorzugt enthalten die nach dem erfindungsgemäßen Verfahren erhaltenen Hämatit Pigmente einen Eisenoxidanteil ($Fe_2O_3$) von größer als 95 Gew.-%, insbesondere größer als 99 Gew.-%, bezogen auf das Pigment.

### Teilchengröße

Die nach dem erfindungsgemäßen Verfahren erhaltenen Hämatit Pigmente sind vorzugsweise aus Primärteilchen aufgebaut, die vorzugsweise eine mittlere Größe von 0,05 bis 0,5, bevorzugt von 0,1 bis 0,3 $\mu$m, besitzen. Die Teilchengröße kann beispielsweise mittels transmissionselektronischen Aufnahmen (Primärteilchen) oder raster-elektronenmikroskopischen Aufnahmen (Festkörper) ermittelt werden.

### Zusammensetzung

Bevorzugt liegt das nach dem erfindungsgemäßen Verfahren erhaltene Hämatit Pigment in einer Zusammensetzung vor, die noch den ebenfalls gebildeten Gips ($CaSO_4 x2H_2O$) enthält. Die Zusammen-setzung enthält bevorzugt bis zu 70 Gew.-% an Gips ($CaSO_4 x2H_2O$), insbesondere 1 bis 70 Gew.-% an Gips, bezogen auf die Zusammensetzung. Bevorzugt ist es aber, den Gipsgehalt durch eine nachträgliche Abtrennung von Gips von dem Pigment zu reduzieren. Bevorzugt ist daher eine Hämatit Pigment-haltige Zusammensetzung, mit einem Gipsgehalt von 0 bis 50 Gew.-%, vorzugsweise von 1 bis 30 Gew.-%, insbesondere von 10 bis 30 Gew.-%, bezogen auf die Zusammensetzung. Ebenfalls bevorzugt enthält die Zusammensetzung Gips in einer Menge kleiner als 5 Gew.-%, insbesondere kleiner als 1 Gew.-%, bezogen auf die Zusammensetzung.

Die Erfindung betrifft daher auch eine solche nach dem obigen Verfahren erhaltene vorzugsweise feste Zusammensetzung. Bevorzugt beträgt der Wassergehalt kleiner 2 Gew.-% bezogen auf die Zusammensetzung.

### Schritt a)

Die Vorlage kann durch einfaches Mischen von Pigmentkeim und Eisensulfat erhalten werden.

### Komponente i)

Als bevorzugter Pigmentkeim wird FeOOH, insbesondere $\alpha$-FeOOH - auch als Goethit bekannt - oder das als Hämatit bekannte $Fe_2O_3$ oder eine Kombination aus beiden eingesetzt.

Bevorzugt ist ein Pigmentkeim mit einer BET Oberfläche von 40 bis 200 m$^2$/g, gemessen nach DIN 66131. Für FeOOH, insbesondere $\alpha$-FeOOH, wird insbesondere eine BET Oberfläche von 100 bis 200 m$^2$/g bevorzugt. Für $Fe_2O_3$ Pigmentkeime sind BET Oberflächen im Bereich von 40 bis 200 m$^2$/g bevorzugt, insbesondere von 40 bis 150 m$^2$/g.

Entsprechend ist das erfindungsgemäße Verfahren bevorzugt, bei dem der Pigmentkeim in der Vorlage FeOOH, insbesondere $\alpha$-FeOOH, der eine BET Oberfläche von 100 bis 200 m$^2$/g oder $Fe_2O_3$ der eine BET Oberfläche von 40 bis 200 m$^2$/g, jeweils gemessen nach DIN 66131, besitzt.

Besonders bevorzugt ist die Verwendung von $Fe_2O_3$ als Pigmentkeim. Diese können bspw. wie in der WO2013/045608 beschrieben hergestellt werden. Eine bevorzugte Herstellung von einem feinteiligem Hämatitkeim mit einer Teilchengröße kleiner als oder gleich 100 nm und einer spezifischen BET-Oberfläche von insbesondere 40 m$^2$/g bis 200 m$^2$/g, vorzugsweise von 40 bis 150 m$^2$/g, gemessen nach DIN 66131, umfassend zumindest die Schritte

a) Bereitstellen einer Mischung von metallischem Eisen und Wasser mit einer Temperatur von 60 bis 120°C,
b) Zugabe von verdünnter Salpetersäure zu der Mischung aus Schritt a)
c) Abtrennung der wässrigen Suspension von feinteiligem Hämatit von gegebenenfalls nicht umgesetztem, metallischen Eisen
d) gegebenenfalls Isolierung des feinteiligen Hämatit aus der abgetrennten wässrigen Suspension.

Bevorzugt gilt das Kriterium der Teilchengröße dabei dann als erfüllt, wenn 90% der Teilchen eine Teilchengröße von kleiner als oder gleich 100 nm, besonders bevorzugt von 30 nm bis 90 nm, aufweisen.

Der Gehalt an Pigmentkeim in der Vorlage vor der Zugabe der Komponenten b), insbesondere der Komponenten b) und c), insbesondere vor Zugabe von Calciumcarbonat beträgt vorzugsweise 1 bis 20 g/L, insbesondere von 2 bis 15 g/L (gerechnet als Fe2O3).

## Komponente ii)

Bevorzugtes Eisensulfat ist das Eisen(II)sulfat Heptahydrat $FeSO_4$ x 7 $H_2O$. Im Rahmen dieser Anmeldung angegeben Mengenangaben, sofern nicht anders bezeichnet, beziehen sich jedoch auf wasserfreies $FeSO_4$.

Bevorzugt beträgt der Gehalt an Eisensulfat in der Vorlage vor der Zugabe der Komponente b), insbesondere vor Zugabe von Calciumcarbonat 20 bis 200 g/L, insbesondere von 40 bis 150 g/L.

Die Vorlage a) vor Zugabe der Komponente b), insbesondere der Komponenten b) und c) enthält den Pigmentkeim und das Eisensulfat vorzugsweise in einem Gewichtsverhältnis von Pigmentkeim zu Eisensulfat von 0,3 zu 1,6, insbesondere von 0,5 bis 1,1.

Bevorzugt wird die Gesamtmenge des zur Herstellung eingesetzten Eisensulfats in der Vorlage a) vor Zugabe der Komponente b), insbesondere vor Zugabe der Komponenten b) und c) eingesetzt.

Das vorzugsweise aus der $TiO_2$-Herstellung stammende eingesetzte Eisensulfat enthält vorzugsweise einen Gehalt von weniger 2 Gew.-% anderer Komponenten.

Die Vorlage wird vor Zugabe der Komponente b), insbesondere vor Zugabe der Komponenten b) und c) bevorzugt auf eine Temperatur von 75 bis 100 °C erwärmt.

## Schritt b)

Als Erdalkalicarbonat wird insbesondere $CaCO_3$, $MgCO_3$, $CaMg(CO_3)_2$ oder Mischungen davon eingesetzt. Besonders bevorzugt wird das Erdalkalicarbonat in Form von Calciumcarbonat, worunter allgemein Calciumcarbonate verstanden werden, die auch Mg wie $CaMg(CO_3)_2$ enthalten, insbesondere Kalkstein oder Dolomit ($CaMg(CO_3)_2$), eingesetzt. Bevorzugtes Calciumcarbonat ist $CaCO_3$. Bevorzugtes Erdalkalicarbonat, insbesondere Calciumcarbonat hat eine Teilchengröße von 35 bis 150 $\mu$m. Die wässrige Suspension des Erdalkalicarbonats, insbesondere Calciumcarbonats, in Schritt b) enthält vorzugsweise das Erdalkalicarbonat, insbesondere Calciumcarbonat in einer Menge von 100 bis 400 g/L, insbesondere von 150 bis 300 g/L.

Die Zugabe von der wässrigen Suspension Erdalkalicarbonat, insbesondere Calciumcarbonat erfolgt üblicherweise über einen Zeitraum von 1 bis 30 Stunden.

## Schritt c)

Weiterhin wird der Vorlage a) ein Sauerstoff-haltiges Gas zugegeben, vorzugsweise durch Einleiten in die Vorlage. Als Sauerstoff-haltiges Gas wird bevorzugt Luft eingesetzt.

Die Zugabe, vorzugsweise die Einleitung des Sauerstoff-haltigen Gases zur Vorlage erfolgt dabei, vorzugsweise während der Erdalkalicarbonatzugabe der Komponente b), sie kann aber auch schon vorher beginnen.

Bevorzugt wird eine Durchflussmenge der Luft in L/h/mol Fe in Lösung von 5 bis 100L/h/mol Fe.

Nach der erfolgten Zugabe der Komponente c) kann die Reaktionsmischung vorzugsweise bei der gegebenen Temperatur noch einige Stunden weiter gehalten werden. Bevorzugt ist es nach erfolgter Zugabe von c) noch 0 bis 8 Stunden zuzugeben.

## Sonstiges

Bevorzugt wird im Verfahren kein elementares Eisen eingesetzt. Ebenfalls bevorzugt ist es, ein anderes Eisensalz als Eisensulfat nur in einer Menge von weniger als 5 Gew.-%, insbesondere weniger als 3 Gew.-%, bezogen auf Eisensulfat (gerechnet als $FeSO_4$) einzusetzen.

## Aufarbeitung

Nach Ende der Reaktionszeit wird die Suspension vorzugsweise auf Raumtemperatur abgekühlt und insbesondere sedimentativ gewaschen bis das Wasser eine Leitfähigkeit von vorzugsweise weniger als 2200$\mu$S aufweist. Der Feststoff wird dann in der Regel abfiltriert und bei 140°C im Ofen getrocknet.

Will man den Gips abtrennen, kann dazu eine Siebung der Suspension erfolgen, vorzugsweise über ein feines Sieb, wie beispielsweise ein Sieb mit 71$\mu$m Maschenweite. Im Anschluss kann das Produkt weiter mit vollentsalztem Wasser, insbesondere bis zu einer Leitfähigkeit von < 2 mS/cm gewaschen werden. Um Verstopfungen am Sieb zu vermeiden, wird vorzugsweise mit einem weichen Pinsel, die Suspension auf dem Sieb vorsichtig bewegt.

**Beispiele**

**Messmethoden**

**Prüfung der Farbwerte im Purton**

Die Ermittlung der Farbwerte im Purton erfolgte nach DIN EN ISO 787-25:2007) unter Verwendung der unten beschriebenen Prüfpaste.

Es wurden 5 g eines thixotropierten langöligen Alkydharzes (WorléeKyd P 151), auf den unteren Teil einer Tellerfarbenausreibemaschine (TFAM) mit 240 mm Plattendurchmesser aufgebracht und das jeweilige Eisenoxid-Rotpigment mit der Prüfpaste zu einer farbigen Paste mit 10% PVK (Pigment-Volumen-Konzentration) verarbeitet.

Die Prüfpaste enthält 95 Gew.-% Alkydharz (Worléekyd P151 der Firma Worlée-Chemie GmbH, DE) und als Thixotropierungsmittel 5 Gew% Luvotix HAT (Lehmann & Voss & Co KG, DE). Dabei wird das Luvotix in das auf 70 bis 75 °C vorgewärmte Alkydharz eingerührt und bei 95 °C bis zur Auflösung eingearbeitet. Die abgekühlte Paste wird anschließend auf einem Dreiwalzwerk Bläschenfrei gewalzt.

Die Einwaage der Rotpigmente erfolgte gemäß

$$ m_P = \frac{PVK * m_b * \rho_p}{(100 - PVK) * \rho_b} $$

$m_P$ = Masse des Eisenoxid-Rotpigments

PVK = Pigment-Volumen-Konzentration

$m_b$ = Masse Bindemittel

$\rho_p$ = Dichte Pigment

$\rho_b$ = Dichte Bindemittel

Die fertige Paste wurde in einen Pastenteller überführt und auf einem Farbmessgerät Datacolor 600 unter der Messgeometrie d / 8° und der Lichtart D65 / 10° mit Glanz farbmetrisch vermessen (CIELAB-Farbraum nach DIN 5033 Teil 7).

**Vergleichsversuch 1 (analog CN102976413 A, Embodiment 1)**

260 g eines $\alpha$-FeOOH Keims mit einer BET Oberfläche von 105 m2/g (Ref. 1) werden mit 1580 g Wasser im Reaktor vorgelegt (mangels anderer Angaben in der CN102976413 wird von einem $\alpha$-FeOOH Keim mit einer unter üblichen Methoden erhaltenen BET Oberfläche in der Größenordnung von etwa 100 m2/g ausgegangen). Der pH-Wert wird mit $H_2SO_4$ auf 4,0 eingestellt und die Mischung auf 70-73°C erwärmt. Zu der so erhaltenen Vorlage wurden 500 g $FeSO_4$ (gerechnet als wasserfreies Eisensulfat), 11333 g Wasser und weitere 90 g des Keims zugegeben. Bei Erreichen von einer Temperatur von T=75°C wird die Luftzufuhr gestartet ( 50 l/ h, pH 2,0-2,5). Dann erfolgte die gleichmäßige Zugabe von insgesamt 2400 g festem $FeSO_4$ (gerechnet als wasserfreies Eisensulfat) und 1573 g festem $CaCO_3$ über einen Zeitraum von 20h. Dafür werden alle 30 min 60g Eisensulfat (gerechnet als wasserfreies Eisensulfat) und 39,3 g $CaCO_3$ zugegeben. Die Luftzufuhr erfolgte in den ersten 20 min der Zugabe mit ca. 50 l/ h, die restliche Zeit wurden 75 l/h eingeleitet. Nach 20 h werden weitere 10 min Luft eingeleitet und anschließend wurde die Temperatur auf 66°C eingestellt (Der pH Wert wurde im Bereich 2,8-3,5 gehalten und es wurden 766 g $FeSO_4$ (s.o.) und 756 g $CaCO_3$ (s.o.) über einen Zeitraum von 10h gleichmäßig zugeben die Luft wurde mit einer Menge von 60 l/ h zugegeben.

Anschließend wird die Reaktionsmischung abgekühlt, der erhaltene Feststoff wird mit vollentsalztem Wasser 3x sedimentativ gewaschen abfiltriert und bei 140°C getrocknet. Eine Abtrennung des gebildeten Gips erfolgte nicht. Die Analyse des erhaltenen Pigments findet sich in Tabelle 1.

**Erfindungsgemäße Beispiele**

**Beispiel 1**

**1a) Herstellung eines Gelbkeims mit einer BET von 100 m$^2$/g**

In einem doppelwandigen 30 Liter Labor- Glasreaktor mit Intermig-Rührer, Temperaturmessung mittels PT100 Thermoelement, EMK und pH-Messung, beheizt über einen Julabo SL Thermostaten, sowie über PCS7-Prozessleitsystem der Firma Siemens gesteuert, wurden 16643 cm$^3$ FeSO$_4$-Lösung mit c = 100g/l unter 300l/h N$_2$-Begasung vorgelegt und unter Rührung mit n = 800min$^{-1}$ in 50 Minuten auf 50°C aufgeheizt. Nach Erreichen der Solltemperatur wurde die Stickstoffbegasung beendet und mit der Dosierung von 2500cm$^3$ NaOH c = 320g/l, unter Begasung mit 500l/h Luft, mit einem ZielpH von 5,0, bei Temperaturkonstanthaltung, begonnen. Nach 402 Minuten Dosierzeit begann die Nachoxidationszeit unter 500l/h Luft. Im Anschluss erfolgte noch eine Nachstellung des Soll-pH Wertes mittels FeSO$_4$-Lösung zum Versuchsende.

Für die Analysedaten wurden 1l der fertigen Keim- Suspension auf einer Nutsche (MN 218) auf < 200μS/cm mittels vollentsalztem Wasser gewaschen und im Umluft(UL)-Trockenschrank über Nacht bei 90°C getrocknet, zerkleinert und anschließend über ein 2 mm Sieb gegeben und analysiert.

**1b) Herstellung Pigment**

In einem 30 Liter Reaktor werden VE-Wasser, Eisensulfat-Lösung und der in Beispiel 1a) hergestellte α-FeOOH Keim mit einer BET Oberfläche von 98 g/m2 zusammengegeben. Die erhaltene Suspension (17L) hat eine FeSO$_4$-Konzentration von 59,8 g/L und eine α-FeOOH Keim-Konzentration von 3 g/L (gerechnet als Fe$_2$O$_3$).

Die Suspension wird auf 85 °C aufgeheizt. Sobald die Temperatur erreicht ist, wird die Luftzufuhr über eine Begasungsschlange mit einer Luftrate von 65 l/h gestartet und es werden 3,554 L einer CaCO$_3$ Suspension (Konz. = 200g/L) über einen Zeitraum von 6,5 h Stunden zugegeben.

Nach 6,5 h wird die Reaktion beendet. Der Fe$^{2+}$-Gehalt als Maß für den Umsatz der Reaktion wird mittels Cerimetrie überprüft. Das entstandene Hämatit wird 3 mal sedimentativ gewaschen, abfiltriert und bei 140 °C im Ofen getrocknet. Das als Nebenprodukt entstehende CaSO$_4$ wird nicht abgetrennt. Die Analyse des Pigments findet sich in Tabelle 1.

Tabelle 1:

| Beispiel | Keim | Keim BET[g/m$^2$] | RZA [g/l/h] | Farbwerte nach CIELab* | | |
|----------|------|------|------|------|------|------|
| | | | | L* | a* | b* |
| Bsp. 1 | α-FeOOH | 98 | 3,4 | 40,2 | 21,7 | 19,2 |
| Vergl. Bsp.1 | α-FeOOH | 105 | 3,5 | 61,3 | 15,1 | 42,5 |

Im Vergleich zu dem aus CN102976413 bekannten Verfahren führt das erfindungsgemäße Verfahren zu coloristisch deutlich verbesserten Rots (höherer a* Wert).

**Beispiel 2a**

**Herstellung eines Hämatitkeims analog Beispiel 2 der WO2013045608**

Die Herstellung des Hämatitkeims erfolgte nach dem Beispiel 2 der WO'608, wobei dabei die Gesamtmenge an Salpetersäure so gewählt wurde, dass sie einer berechneten Anfangskonzentration anstelle von 4,5 Gew.-% einer von nun 7 Gew.-% in der Reaktionsmischung beträgt. Es wurde ein Keim mit einer BET Oberfläche von 98 m$^2$/g erhalten.

**Beispiel 2b**

In einem 30 Liter Reaktor werden VE Wasser Eisensulfat Lösung und Keim aus Beispiel 2a) zusammen gegeben, so dass sich 17L einer Suspension mit einer FeSO$_4$-Konzentration von 108 g/L und einer Hämatit Keim Konzentration von 8 g/ L (gerechnet als Fe$_2$O$_3$) ergibt.

Die Suspension wird auf 85 °C aufgeheizt. Sobald die Temperatur erreicht ist wird die Luftzufuhr über eine Begasungsschlange mit einer Luftrate von 250l/h gestartet und es werden 6,669L einer CaCO$_3$ Suspension (Konzent-

ration 200g/L) über einen Zeitraum von 7,5 Stunden zugegeben.

Nach 7,5 h wird die Reaktion beendet. Der $Fe^{2+}$-Gehalt wird mittels Cerimetrie überprüft. Das entstandene Hämatit wird 3 mal sedimentativ gewaschen, abfiltriert und bei 140 °C im Ofen getrocknet. Das als Nebenprodukt entstehende $CaSO_4$ (ca. 25 Gew.-%) wird nicht abgetrennt. Raumzeitausbeute (RZA) = 5,4 g/l/h. Die Analyse des Pigments findet sich in Tabelle 2.

Tabelle 2:

| Versuch | Keim | Keim BET [$m^2$/g] | $Fe^{2+}$-Gehalt nach 7,5 h [g/L] | Ausbeute[1] [%] | Farbwerte (Purton) | | |
|---------|------|-----|-----|-----|------|------|------|
| | | | | | L* | a* | b* |
| Beispiel 2 | $\alpha$-$Fe_2O_3$ | 98 | 0,0 | 100 | 36,3 | 28,9 | 19,8 |
| [1] bestimmt über $Fe^{2+}$-Gehalt | | | | | | | |

**Beispiel 3**

In einem 30 Liter Reaktor werden VE -Wasser, Eisensulfat-Lösung und Keim aus Beispiel 2a) zusammen gegeben so, dass sich eine 17L-Suspension mit einer $FeSO_4$-Konzentration von 108 g/L und einer Keim Konzentration von 8 g/L (gerechnet als $Fe_2O_3$) ergibt.

Die Suspension wird auf 85 °C aufgeheizt. Sobald die Temperatur erreicht ist wird die Luftzufuhr über eine Begasungsschlange mit einer Luft Rate von 125 l/h gestartet und es werden 6,669 L einer $CaCO_3$ Suspension (Konz. = 200g/L) über einen Zeitraum von 7,6 h Stunden zugegeben.

Der $Fe^{2+}$-Gehalt wird mittels Cerimetrie überprüft. Das entstandene Hämatit wird 3 mal sedimentativ gewaschen, abfiltriert und bei 140 °C im Ofen getrocknet. Das als Nebenprodukt entstehende $CaSO_4$ (ca. 15 Gew.-%) wird nicht abgetrennt. RZA = 5,4 g/l/h ($Fe_2O_3$)

Die Analyse des Pigments findet sich in Tabelle 3.

Tabelle 3:

| Versuch | Keim | Keim BET [$m^2$/g] | $Fe^{2+}$-Gehalt nach 7,5 h [g/L] | Ausbeute[1] [%] | Farbwerte (Purton) | | |
|---------|------|-----|-----|-----|------|------|------|
| | | | | | L* | a* | b* |
| Beispiel 3 | $\alpha$-$Fe_2O_3$ | 98 | 0,0 | 100 | 36,1 | 28,1 | 18,5 |
| [1] bestimmt über $Fe^{2+}$-Gehalt | | | | | | | |

**Beispiel 4**

**Beispiel 4a)**

**Herstellung eines Hämatitkeims analog Beispiel 2 der WO2013045608**

Die Herstellung des Hämatitkeims erfolgte nach dem Beispiel 2 der WO'608, wobei dabei die Gesamtmenge an Salpetersäure so gewählt wurde, dass sie einer berechneten Anfangskonzentration anstelle von 4,5 Gew.-% einer von nun 8 Gew.-% in der Reaktionsmischung beträgt. Es wurde ein Keim mit einer BET Oberfläche von 120 $m^2$/g erhalten.

**Beispiel 4b)**

In einem 30 Liter Reaktor werden VE-Wasser, Eisensulfat-Lösung und Keim aus Beispiel 4a) zusammen gegeben so, dass sich 17L einer Suspension mit einer $FeSO_4$-Konzentration von 59,5 g/L und einer Keim Konzentration von 5 g/L (gerechnet als $Fe_2O_3$) ergibt.

Die Suspension wird auf 85 °C aufgeheizt. Sobald die Temperatur erreicht ist wird die Luftzufuhr über eine Begasungsschlange mit einer Luftrate von 66 l/h gestartet und es werden 3,295 L einer $CaCO_3$ Suspension (Konz. = 200g/L) über einen Zeitraum von 7,5 h Stunden zugegeben.

Nach 7,5 h wird die Reaktion beendet. Der Der $Fe^{2+}$-Gehalt wird mittels Cerimetrie überprüft. Das entstandene Hämatit wird 3 mal sedimentativ gewaschen, abfiltriert und bei 140 °C im Ofen getrocknet. Das als Nebenprodukt entstehende $CaSO_4$ (ca. 45Gew.-%) wird nicht abgetrennt. RZA = 3,4 g $Fe_2O_3$/L/h

Die Analyse des Pigments findet sich in Tabelle 4.

Tabelle 4:

| Beispiel | Keim | Keim BET [m²/g] | Fe²⁺-Gehalt nach 7,5 h [g/L] | Ausbeute¹⁾[%] | L* | a* | b* |
|---|---|---|---|---|---|---|---|
| | | | | | Farbwerte (Purton) | | |
| Beispiel 4 | α-Fe₂O₃ | 120 | 6,0 | 88 | 36,6 | 27,5 | 17,9 |
| ¹⁾ bestimmt über Fe²⁺-Gehalt | | | | | | | |

**Beispiel 5**

In einem 1,5m³ Reaktor mit Dampfheizung, Rührer und Umpumpungseinrichtung werden 429 kg Wasser, 201 kg Eisensulfat-Lösung (entspricht 38 kg Eisensufat, gerechnet wasserfrei) und 37 kg Hämatit Keim-Suspension (entspricht 3,7 kg Keim aus Bsp. 4a) zusammengegeben und auf 85°C erhitzt.

Sobald die Temperatur erreicht ist, wird die Luftzufuhr über eine Begasungsschlange mit einer Luftrate von 2550 l/h gestartet und es werden 125 L einer CaCO₃ Suspension (Konzentration = 200g/L) über einen Zeitraum von 7,5 h Stunden zugegeben.

Nach 7,5 h wird die Reaktion beendet und die Suspension abgekühlt. Der Fe²⁺-Gehalt wird mittels Cerimetrie überprüft. Das entstandene Hämatit wird 3 mal sedimentativ gewaschen, abfiltriert und bei 140 °C im Ofen getrocknet. Bei einer kleinen Menge wurde das während der Reaktion entstandene CaSO₄ mit einem Sieb ( 71 μm Mesh) abgesiebt um ein Eisenoxid mit einem Gips-Gehalt von kleiner1 Gew.-% zu erhalten. Die Analyse des Pigments findet sich in Tabelle 5 (RZA = 3,5 g/l/h).

Tabelle 5:

| Versuch | Keim | Keim BET [m²/g] | Fe²⁺-Gehalt nach 7,6 h [g/L] | Ausbeute¹⁾ [%] | L* | a* | b* |
|---|---|---|---|---|---|---|---|
| | | | | | Farbwerte (Purton) | | |
| Beispiel 5 | α-Fe₂O₃ | 120 | | | 37,3 | 27,8 | 18,8 |
| Beispiel 5 ohne CaSO₄ | α-Fe₂O₃ | 120 | 0,0 | 100 | 37,2 | 27,6 | 18,6 |
| ¹⁾ bestimmt über Fe²⁺-Gehalt | | | | | | | |

**Patentansprüche**

1.   Verfahren zur Herstellung von einem Hämatit Pigment mit einem a*-Wert von größer als 20, insbesondere größer als 25, CIELAB Einheiten als Purton gemessen im Alkydharz nach DIN EN ISO 787-25 : 2007, durch Umsetzung von Eisensulfat mit Sauerstoff in Gegenwart eines Pigmentkeims, **dadurch gekennzeichnet, dass** man

    a) Wasser, enthaltend

        i) wenigstens einen Pigmentkeim ausgewählt aus der Gruppe bestehend aus FeOOH und Fe₂O₃ und
        ii) Eisensulfat
        als Vorlage vorlegt und

    b) wenigstens ein Erdalkalicarbonat, insbesondere CaCO₃, MgCO₃, CaMg(CO₃)₂ oder Mischungen davon und
    c) Sauerstoff-haltiges Gas
    zu der Vorlage zugibt, wobei wenigstens 95 Gew.-% der Gesamtmenge an in dem Verfahren eingesetztem Eisensulfat vor Zugabe der Komponenten b) und c) in der Vorlage a) enthalten sind und die Zugabe der Komponente b) zur Vorlage in Form einer wässrigen Suspension erfolgt.

2.   Verfahren gemäß Anspruch 1, **dadurch gekennzeichnet, dass** der Gehalt an Eisensulfat in der Vorlage vor der Zugabe von Komponente b) 20 bis 200 g/L beträgt.

**3.** Verfahren gemäß Anspruch 1 oder 2, **dadurch gekennzeichnet, dass** der Gehalt an einen FeOOH und/oder $Fe_2O_3$ Keim in der Vorlage vor der Zugabe von Komponente b) 1 bis 20 g/L beträgt.

**4.** Verfahren gemäß wenigstens einem der Ansprüche 1 bis 3, **dadurch gekennzeichnet, dass** die Zugabe der Komponente b) zur Vorlage bei einer Temperatur von 75 bis 100 °C erfolgt.

**5.** Verfahren gemäß wenigstens einem der Ansprüche 1 bis 4, **dadurch gekennzeichnet, dass** die wässrige Suspension der Komponente b) einen Gehalt von 100 bis 400 g/L $CaCO_3$ aufweist.

**6.** Verfahren gemäß wenigstens einem der Ansprüche 1 bis 4, **dadurch gekennzeichnet**, das der Pigmentkeim in der Vorlage FeOOH, insbesondere $\alpha$-FeOOH, mit einer BET Oberfläche von 130 bis 200 $m^2$/g oder $Fe_2O_3$ mit einer BET Oberfläche von 40 bis 200 $m^2$/g, jeweils gemessen nach DIN 66131, ist.

**7.** Verfahren gemäß wenigstens einem der Ansprüche 1 bis 5, **dadurch gekennzeichnet, dass** die Teilchengröße des Pigmentkeims kleiner oder gleich 100 nm ist.

**8.** Verfahren gemäß wenigstens einem der Ansprüche 1 bis 7, **dadurch gekennzeichnet, dass** das erhaltenen Hämatit Pigment einen Eisenoxidanteil ($Fe_2O_3$) von größer als 95 Gew.-%, vorzugsweise von größer als 99 Gew.-%, bezogen auf das Pigment, besitzt.

**Claims**

**1.** Process for producing a haematite pigment having an a* value greater than 20, especially greater than 25, CIELAB units measured as a full shade in alkyd resin to DIN EN ISO 787-25:2007, by reacting iron sulfate with oxygen in the presence of a pigment seed, **characterized in that**

    a) water comprising

        i) at least one pigment seed selected from the group consisting of FeOOH and $Fe_2O_3$ and
        ii) iron sulfate
    forms an initial charge and

    b) at least one alkaline earth metal carbonate, especially $CaCO_3$, $MgCO_3$, $CaMg(CO_3)_2$ or mixtures thereof and
    c) oxygen-containing gas
    are added to the initial charge, where at least 95% by weight of the total amount of iron sulfate used in the process is present in the initial charge a) prior to addition of components b) and c), and component b) is added to the initial charge in the form of an aqueous suspension.

**2.** Process according to Claim 1, **characterized in that** the iron sulfate content in the initial charge prior to the addition of component b) is 20 to 200 g/l.

**3.** Process according to Claim 1 or 2, **characterized in that** the content of an FeOOH and/or $Fe_2O_3$ seed in the initial charge prior to the addition of component b) is 1 to 20 g/l.

**4.** Process according to at least one of Claims 1 to 3, **characterized in that** component b) is added to the initial charge at a temperature of 75 to 100°C.

**5.** Process according to at least one of Claims 1 to 4, **characterized in that** the aqueous suspension of component b) has a content of 100 to 400 g/l $CaCO_3$.

**6.** Process according to at least one of Claims 1 to 4, **characterized in that** the pigment seed in the initial charge is FeOOH, especially $\alpha$-FeOOH, with a BET surface area of 130 to 200 $m^2$/g or $Fe_2O_3$ with a BET surface area of 40 to 200 $m^2$/g, measured in each case to DIN 66131.

**7.** Process according to at least one of Claims 1 to 5, **characterized in that** the particle size of the pigment seed is smaller than or equal to 100 nm.

8. Process according to at least one of Claims 1 to 7, **characterized in that** the haematite pigment obtained has an iron oxide content ($Fe_2O_3$) of greater than 95% by weight, preferably of greater than 99% by weight, based on the pigment.

**Revendications**

1. Procédé pour la préparation d'un pigment d'hématite doté d'une valeur de a* supérieure à 20, en particulier supérieure à 25, unités CIELAB dans la couleur en masse mesurée dans une résine d'alkyde selon la norme DIN EN ISO 787-25 : 2007, par transformation de sulfate de fer avec de l'oxygène en présence d'un germe de pigment, **caractérisé en ce qu'**on charge, en tant que charge,

   a) de l'eau, contenant

      i) au moins un germe de pigment choisi dans le groupe constitué par FeOOH et $Fe_2O_3$ et
      ii) du sulfate de fer
      et on ajoute

   b) au moins un carbonate alcalino-terreux, en particulier $CaCO_3$, $MgCO_3$, $CaMg(CO_3)_2$ ou des mélanges correspondants et
   c) un gaz contenant de l'oxygène
   à la charge, au moins 95 % en poids de la quantité totale de sulfate de fer utilisé dans le procédé avant l'ajout des composants b) et c) étant contenus dans la charge a) et l'ajout du composant b) à la charge étant réalisé sous forme d'une suspension aqueuse.

2. Procédé selon la revendication 1, **caractérisé en ce que** la teneur en sulfate de fer dans la charge avant l'ajout du composant b) est de 20 à 200 g/L.

3. Procédé selon la revendication 1 ou 2, **caractérisé en ce que** la teneur en un germe de FeOOH et/ou $Fe_2O_3$ dans la charge avant l'ajout du composant b) est de 1 à 20 g/L.

4. Procédé selon au moins l'une des revendications 1 à 3, **caractérisé en ce que** l'ajout du composant b) à la charge est réalisé à une température de 75 à 100 °C.

5. Procédé selon au moins l'une des revendications 1 à 4, **caractérisé en ce que** la suspension aqueuse du composant b) présente une teneur de 100 à 400 g/L de $CaCO_3$.

6. Procédé selon au moins l'une des revendications 1 à 4, **caractérisé en ce que** le germe de pigment dans la charge est FeOOH, en particulier $\alpha$-FeOOH, doté d'une surface BET de 130 à 200 m²/g ou $Fe_2O_3$ doté d'une surface BET de 40 à 200 m²/g, à chaque fois mesurée selon la norme DIN 66131.

7. Procédé selon au moins l'une des revendications 1 à 5, **caractérisé en ce que** la taille de particule du germe de pigment est inférieure ou égale à 100 nm.

8. Procédé selon au moins l'une des revendications 1 à 7, **caractérisé en ce que** le pigment d'hématite obtenu possède une proportion d'oxyde de fer ($Fe_2O_3$) supérieure à 95 % en poids, de préférence supérieure à 99 % en poids, par rapport au pigment.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013045608 A
- CN 102976413
- CN 101844815
- DE 4235944 A1